# EUROPEAN PATENT SPECIFICATION

(11) **EP 0 693 527 B1**
(45) Date of publication and mention of the grant of the patent: **06.06.2001**
(21) Application number: 95304336.1
(22) Date of filing: 21.06.1995
(51) Int. Cl.: C08J 11/24, C08G 63/52, C08G 18/68

(54) **Method of recycling unsaturated polyester resin waste and recycling apparatus**
Verfahren zur Wiederverwertung von ungesättigten Polyesterharz-Abfällen und Wiederverwertungsvorrichtung
Procédé de récyclage de déchets de résine polyester insaturée et appareil de recyclage

(30) Priority: 21.06.1994 JP 13876294; 20.12.1994 JP 31628594; 15.05.1995 JP 11611195
(43) Date of publication of application: 24.01.1996
(73) Proprietor: WAKAYAMA PREFECTURE, Wakayama-shi, Wakayama (JP); MIYASO CHEMICAL CO., Tanabe-shi, Wakayama (JP)
(72) Inventor: Kubota, Shizuo, Ito-gun, Wakayama (JP); Ito, Osamu, Wakayama-shi, Wakayama (JP); Miyamoto, Hiroyuki, c/o Miyaso Chemical Co., Tanabe-shi, Wakayama (JP)
(74) Representative: Lyons, June Margaret

(56) References cited:
- WO-A-94/25517
- DE-A- 2 413 717

## Description

The present invention relates to a method of recycling unsaturated polyester resin waste and a recycling apparatus, and more particularly, it relates to a method of recycling unsaturated polyester resin waste by chemically treating the same and obtaining industrially valuable raw material, and an apparatus for carrying out the method.

For example, most of buttons are made of unsaturated polyester resin. Such buttons are manufactured by punching out an unsaturated polyester resin sheet and cutting out the intermediate products as obtained. In the manufacturing steps, however, about 50 % of the raw material is wasted as chippings and shavings. The problem of waste disposal also arises in relation to fiber reinforced plastic products such as FRP ships and bathtubs having matrices of unsaturated polyester resin. Thus, it is desirable to recycle such unsaturated polyester resin waste.

However, it is impossible to remelt and remold waste of the unsaturated polyester resin, which is thermosetting resin having a three-dimensional network structure, dissimilarly to that of thermoplastic resin such as polypropylene, for example. Further, the unsaturated polyester resin cannot be dissolved in a solvent.

To this end, there has been made study on a method of pulverizing fiber reinforced plastic (FRP) waste having a matrix of unsaturated polyester resin and recycling the same as a filler (Yoshihiro Fukuda, Kagaku to Kogyo (Osaka), 68 (2), 60 (1994)). However, the inventors have confirmed that this method encounters such a problem that the strength of the recycled resin, which is reduced as the amount of the waste powder is increased, entirely depends on the amount of new unsaturated polyester resin.

There has been made another study on a method of degrading the aforementioned FRP under a steam atmosphere at a temperature of 500°C for obtaining components such as phthalic acid (Yoshinari Kobayashi, Kagaku to Kogyo (Osaka), 66 (10), 452 (1992); Kazuhide Hamada, Jun Hosokawa and Masashi Nishiyama, Kobunshi Ronbunshu, 49 (8), 655 (1992); Yoshio Kobayashi, Dai 42-Kai Kobunshi Kaki-Daigaku Koen Yoshishu, p. 134 (1994)). Further, a stem pyrolytic furnace for FRP has also been devised. However, the high temperature of 500°C is necessary for thermally degrading the FRP, and hence this method inevitably requires a specific equipment. Further, glass fiber contained in the FRP is deteriorated due to the high temperature.

Accordingly, an aim of the present invention is to provide a method of recycling unsaturated polyester resin waste by chemically treating the same and obtaining industrially valuable raw material with a simple equipment, i.e., a method of chemically recycling unsaturated polyester resin waste, and an apparatus for carrying out the method.

In order to solve the aforementioned technical problems, the inventive method of recycling unsaturated polyester resin waste comprises a step of degrading unsaturated polyester resin waste with glycol, thereby obtaining glycolic raw material.

Preferably, the degradation with glycol is carried out under a pressure.

The present invention is applicable to recycling of not only waste of the aforementioned resin employed for manufacturing buttons, but general unsaturated polyester resin waste. The unsaturated polyester resin to which the present invention is applied may contain a filler of calcium carbonate, or may be composed with glass fiber.

According to the present invention, the unsaturated polyester resin waste is preferably crushed and thereafter degraded with glycol, so that degradation of the waste with glycol is further facilitated. The waste can be crushed with a hammer or chain type impact crusher, a shear crusher, a cutting crusher, a roll, conveyor or screw type compression crusher, a stamp mill, a ball mill or a rod mill. The grain size of the waste powder obtained by such crushing is preferably minimized, such that powder which is passed through a screen having meshes of 300 µm is advantageously employed, for example.

According to the present invention, glycol which is employed for the degradation with glycol may be prepared from ethylene glycol, propylene glycol, diethylene glycol, dipropylene glycol, triethylene glycol, polyethylene glycol, tripropylene glycol, polypropylene glycol, neopentyl glycol, 1,3-butanediole, 1,6-hexanediole, bisphenol A hydride, bisphenol A propylene oxide adduct, or dibromoneopentyl glycol.

In the degradation with glycol, a catalyst is preferably employed. This catalyst is prepared from sodium methylate, sodium ethylate, sodium hydroxide, methanesulfonic acid, or metal acetate such as zinc acetate, magnesium acetate, calcium acetate, lithium acetate, sodium acetate, magnesium oxide, barium oxide, or calcium oxide, for example. However, it is possible to carry out the degradation with glycol without employing such a catalyst.

In the degradation with glycol, a temperature of about 150° to 250° is preferably supplied. The upper limit of the temperature range of about 250°C is selected in relation to the boiling point of the glycol as employed, so that the glycol can maintain its liquid state. This upper limit temperature is preferably selected at a degree not substantially oxidizing the glycol.

When waste FRP is treated, the temperature which is supplied in the degradation with glycol will not deteriorate the glass fiber contained in the FRP, and hence the glass fiber can be recycled.

The degradation with glycol is preferably carried out under a nitrogen atmosphere, in order to prevent oxidation of the glycol.

Such degradation of unsaturated polyester resin waste with glycol according to the present invention can be carried out by the following apparatus:

The apparatus for degrading unsaturated polyester resin waste according to the present invention comprises a reaction vessel of stainless, first injection means for injecting glycol into the reaction vessel, second injection means for injecting a catalyst into the reaction vessel, third injection means for injecting unsaturated polyester resin waste into the reaction vessel, heating means for heating the reaction vessel, cooling means for cooling the reaction vessel, a stirrer for stirring a reacted solution in the reaction vessel, a cooler for liquefying volatile components, including a subliming component, generated in the reaction vessel, a trap provided in a path connecting the reaction vessel with the cooler for removing the subliming component generated in the reaction vessel, and an outlet port provided in the reaction vessel for taking out a degradation liquid resulting from degradation reaction in the reaction vessel. The reaction vessel may be of e.g. stainless steel.

Preferably, the reaction vessel is closable.

The catalyst is prepared from sodium hydroxide, for example.

According to the present invention, further, the glycolic raw material obtained in the aforementioned manner can be effectively used as raw material for obtaining industrially useful resin. For example, it is possible to synthesize unsaturated polyester resin by reacting the glycolic raw material with dibasic acid, for example. Further, it is also possible to synthesize polyurethane resin by reacting the glycolic raw material with a diisocyanate compound.

The pre-synthesis of the unsaturated polyester resin or the polyurethane resin from the glycolic raw material is preferably carried out under a nitrogen atmosphere, in order to prevent oxidation of the glycol.

The dibasic acid employed for synthesizing the unsaturated polyester resin includes unsaturated dibasic acid and saturated dibasic acid, both of which are employed in general. Examples of the unsaturated dibasic acid are maleic anhydride, fumaric acid and itaconic acid. Examples of the saturated dibasic acid are phthalic anhydride, isophthalic acid, terephthalic acid, tetrahydrophthalic anhydride, methyltetrahydrophthalic anhydride, endomethylenetetrahydrophthalic anhydride, adipic acid, sebacic acid, chlorendic acid (1,4,5,6,7,7-hexachlorobicylo [2,2,1]-5-heptene-2,3-dicarboxylic acid), and tetrabromophthalic anhydride. The terephthalic acid can be prepared from that discharged through alkali reduction of polyester fiber.

The unsaturated polyester resin can be synthesized by an ordinary method of setting a reaction temperature of 140°C to 230°C, condensing the material for 2 to 6 hours while distilling water away under nitrogen, cooling the reactant, thereafter introducing 30 to 40 % of styrene therein, and adding 0.02 part of hydroquinone for serving as a polymerization inhibiter.

On the other hand, the diisocyanate compound which is reacted with the glycolic raw material for synthesizing polyurethane resin is prepared from toluene diisocyanate, diphenylmethane diisocyanate (MDI), naphthalene diisocyanate, tolidine diisocyanate, hexamethylene diisocyanate, isophorone diisocyanate, p-phenylene diisocyanate, transcyclohexane 1,4-diisocyanate, xylylene diisocyanate (XDI), hydrogeneration XDI, hydrogeneration MDI, lysine diisocyanate, or tetramethylxylene diisocyanate. The polyurethane resin can be synthesized by an ordinary method.

The unsaturated polyester resin or the polyurethane resin recycled in the aforementioned manner can be employed as a molding material, an adhesive or a paint. Such resin is molded by an ordinary molding method such as hand lay up molding, compression molding, cast molding, injection molding, reaction injection molding, or transfer molding.

The aforementioned degradation and re-synthesis of unsaturated polyester resin waste according to the present invention can be carried out by the following apparatus:

A recycling apparatus for unsaturated polyester resin waste according to the present invention comprises a reaction vessel of stainless, first injection means for injecting glycol into the reaction vessel, second injection means for injecting a catalyst into the reaction vessel, third injection means for injecting unsaturated polyester resin waste into the reaction vessel, heating means for heating the reaction vessel, cooling means for cooling the reaction vessel, a stirrer for stirring a reacted solution in the reaction vessel, a cooler for liquefying volatile components, including a subliming component, generated in the reaction vessel, a trap provided in a path connecting the reaction vessel with the cooler for removing the subliming component generated from the reaction vessel, an outlet port provided in the reaction vessel for taking out a degradation liquid resulting from degradation reaction in the reaction vessel, a centrifugal separator for centrifuging the degradation liquid taken out from the outlet port, fourth injection means for re-injecting the degradation liquid, which is subjected to removal of precipitates by centrifugation through the centrifugal separator, into the reaction vessel for re-synthesis reaction, fifth injection means for injecting maleic anhydride into the reaction vessel, sixth injection means for injecting phthalic anhydride into the reaction vessel, seventh injection means for injecting styrene into the reaction vessel, and a nitrogen inlet tube for introducing nitrogen gas into the reaction vessel which is under re-synthesis reaction, for re-synthesizing recycled unsaturated polyester resin in the reaction vessel while carrying out heating by the heating means and stirring by the stirrer.

Preferably, the reaction vessel is closable.

The catalyst is prepared from sodium hydroxide, for example.

According to the present invention, it is possible to obtain industrially useful glycolic raw material from the unsaturated polyester resin waste. The degradation with glycol for obtaining such glycolic raw material can be carried out at a relatively low temperature through a relatively simple operation, whereby the unsaturated polyester resin waste can be recycled with a relatively simple equipment.

According to the present invention, the degradation rate can be prompted by carrying out the degradation with glycol under a high temperature and a pressure. Namely, the reaction can be made with glycol having a low boiling point at a temperature exceeding the boiling point, by carrying out the reaction under a pressure. The price of the glycol is reduced as the boiling point is reduced, and hence such reaction under a pressure is effective for reducing the cost. Also in consideration of prevention of oxidation, the reaction vessel is preferably closed for carrying out the reaction under a pressure.

Each of the degradation apparatus and the recycling apparatus for unsaturated polyester resin waste according to the present invention comprises a reaction vessel of stainless. This reaction vessel of stainless is superior in resistance against alkali and can be used at a higher temperature, as compared with that of glass. Further, the reaction vessel of stainless has a high torque of stirring, whereby the ratio of the unsaturated polyester resin waste to the glycol can be increased.

In addition, each of the degradation apparatus and the recycling apparatus for unsaturated polyester resin waste according to the present invention can be used under a pressure if the reaction vessel is closable. When the apparatus is used under a pressure, degradation is effectively prompted since treatment is enabled at a temperature exceeding the boiling point of the glycol as employed.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 schematically illustrates the structure of an exemplary recycling apparatus for unsaturated polyester resin waste according to the present invention; and
Fig. 2 is adapted to illustrate a trap provided in the apparatus shown in Fig. 1.

### DESCRIPTION OF THE PREFERRED EMBODIMENTS

The present invention is now described in more concrete terms with reference to Examples.

### (A) Examples Under Normal Pressure

In the following Examples 1 to 16, chippings of buttons consisting of unsaturated polyester resin were crushed by a crusher MIYAKO DM-6 (by Miyako Product Co., Inc., rotational frequency: 28,000/min., capacity: 150 g), and the powder materials as obtained were passed through screens having meshes of 300 µm for preparing samples.

### (Example 1) Degradation with Glycol by EtONa Catalyst

10 g of unsaturated polyester resin waste, 100 g of ethylene glycol, and 2 g of EtONa were introduced into a 1L three-necked round bottom flask provided with a stirrer and a cooler, and treated at 180°C for 5 hours and then at 200°C for 8 hours respectively. The reactant obtained by such treatment was filtered, washed with tetrahydrofuran (THF), and dried. 4.5636 g of remainder resin was filtered out, with a degradation rate of 54.4 %. A THF solution was prepared from the degradation product, the molecular weight of which was measured through gel permeation chromatography (GPC) with reference to standard polystyrene, to observe values of number-average molecular weight and (weight-average molecular weight)/(number-average molecular weight) of 138 and 1.05 respectively.

### (Example 2) Degradation with Glycol by CH₃SO₃H Catalyst

10 g of unsaturated polyester resin waste, 100 g of ethylene glycol, and 2 g of methanesulfonic acid were introduced into a round bottom flask which was similar to that employed in Example 1, and treated at 180°C for 5 hours and then at 200°C for 8 hours respectively. The reactant obtained by such treatment was filtered, washed with THF, and dried. 6.6807 g of remainder resin was filtered out, with a degradation rate of 33.2 %. The degradation product was subjected to measurement of the molecular weight similarly to Example 1, to exhibit values of number-average molecular weight and (weight-average molecular weight)/(number-average molecular weight) of 186 and 1.06 respectively.

### (Example 3) Degradation with Glycol by MeONa Catalyst

20 g of unsaturated polyester resin waste, 40 g of ethylene glycol, 2 g of sodium methylate, and 50 ml of dimethylformamide (DMF) were introduced into a round bottom flask which was similar to that employed in Example 1 and treated at 150°C for 5 hours, the DMF was distilled away, and thereafter the mixture was further treated at 200°C for 8 hours. The reactant obtained by such treatment was filtered, washed with THF, and dried. 10.2216 g of remainder resin was filtered out, with a degradation rate of 48.89 %.

### (Example-4) Degradation with Glycol by No Catalyst

10 g of unsaturated polyester resin waste and 100 g of ethylene glycol were introduced into a round bottom flask which was similar to that employed in Example 1, and treated at 200°C for 13 hours. The reactant obtained by such treatment was filtered, washed with THF, and dried. 6.0431 g of remainder resin was filtered, with a degradation rate of 39.57 %.

### (Example 5) Degradation with Glycol under Relatively Low Temperature

10 g of unsaturated polyester resin waste, 20 g of ethylene glycol, 100 ml of THF, and 1 g of EtONa were introduced into a round bottom flask which was similar to that employed in Example 1, and treated at 70°C for 13 hours. The reactant obtained by such treatment was filtered, washed with THF, and dried. 9.7670 g of remainder resin was filtered out, with a degradation rate of 2.3 %.

### (Example 6) Degradation with Glycol by NaOH Catalyst

10 g of unsaturated polyester resin waste, 40 g of ethylene glycol, and 2 g of sodium hydroxide were introduced into a round bottom flask which was similar to that employed in Example 1, and treated at 200°C for 9 hours. The reactant obtained by such treatment was filtered, washed with THF, and dried. 4.2357 g of remainder resin was filtered out, with a degradation rate of 57.64 %.

### (Example 7) Degradation with Glycol by NaOH Catalyst

100 g of unsaturated polyester resin waste, 120 g of ethylene glycol, and 1 g of sodium hydroxide were introduced into a round bottom flask which was similar to that employed in Example 1, and treated at 200°C for 24 hours. The reactant obtained by such treatment was filtered, washed with THF, and dried. 46.0 g of remainder resin was filtered out, with a degradation rate of 54.0 %.

Further, 2 g of sodium hydroxide, 2g of sodium ethylate and 250 g of diethylene glycol were added to 46.0 g of the remainder resin, and the mixture was introduced into a round bottom flask similarly to the above, to be treated at 245°C for 8.5 hours. Then, the reactant as obtained was filtered similarly to the above, washed with THF, and dried. 0.8 g of remainder resin was filtered out, with a degradation rate of 98.3 %.

### (Example 8) Degradation of FRP Waste with Glycol

100 g of FRP waste, 150 g of ethylene glycol, and 1 g of sodium hydroxide were introduced into a round bottom flask which was similar to that employed in Example 1, treated at 200°C for 14 hours. The reactant obtained by such treatment was filtered, washed with THF, and dried. 76.52 g of remainder resin was filtered out, with a degradation rate of 23.43 %.

### (Example 9) Degradation with Glycol by Zinc Acetate Catalyst

10 g of unsaturated polyester resin waste, 40 g of ethylene glycol, and 0.5 g of zinc acetate were introduced into a round bottom flask which was similar to that employed in Example 1, and treated at 200°C for 7 hours. The reactant obtained by such treatment was filtered, washed with THF, and dried. 5.8665 g of remainder resin was filtered out, with a degradation rate of 41.34 %.

### (Example 10) Degradation with Glycol by Propylene Glycol

10 g of unsaturated polyester resin waste, 40 g of propylene glycol, and 2 g of sodium methylate were introduced into a round bottom flask which was similar to that employed in Example 1, and treated at 200°C for 9 hours. The reactant obtained by such treatment was filtered, washed with THF, and dried. 7.6956 g of remainder resin was filtered out, with a degradation rate of 23.04 %. Values or number-average molecular weight and (weight-average molecular weight)/(number-average molecular weight) obtained through GPC were 293 and 1.03 respectively.

### (Example 11) Degradation with Glycol by Propylene Glycol

20 g of unsaturated polyester resin waste, 40 g of propylene glycol, and 2 g of sodium ethylate were introduced into a round bottom flask which was similar to that employed in Example 1, and treated at 190°C for 10 hours. The reactant obtained by such treatment was filtered, washed with THF, and dried. 15.3695 g of remainder resin was filtered out, with a degradation rate of 23.15 %.

### (Example 12) Synthesis of Recycled Unsaturated Polyester Resin

The ethylene glycol degradation product (degradation product of 9.7784 g in ethylene glycol of 40 g; 0.644 mol) obtained in Example 3 was neutralized with hydrochloric acid, 74.8 g (0.644 mol) of maleic acid was added thereto, water was distilled away under nitrogen, and the mixture was reacted at 210°C for 2 hours, to obtain 92.1 g of recycled unsaturated polyester resin. Through GPC, the resin as obtained exhibited values of number-average molecular weight and (weight-average molecular weight)/(number-average molecular weight) of 1,121 and 1.38 respectively.

### (Example 13) Synthesis of Recycled Unsaturated Polyester Resin

The propylene glycol degradation product (degradation product of 4.6305 g in propylene glycol of 40 g; 0.525 mol) obtained in Example 11 was neutralized with hydrochloric acid, and 20.6 g (0.210 mol) of maleic acid and 46.7 g (0.315 mol) of phthalic anhydride were added thereto, water was distilled away under nitrogen, and the mixture was reacted at 210°C for 4 hours, to obtain 68.9 g of recycled unsaturated polyester resin. Through GPC, the resin as obtained exhibited values of number-average molecular weight and (weight-average molecular weight)/(number-average molecular weight) of 1,508 and 2.01 respectively. For the purpose of comparison, it is pointed out that "Polylite 210M" by Dainippon Ink and Chemicals, Inc. has values of number-average molecular weight and (weight-average molecular weight)/(number-average molecular weight) of 1,646 and 3.26 respectively.

45.9 g of styrene was added to 68.9 g of the unsaturated polyester resin obtained in the aforementioned manner, with addition of 1 % each of methyl ethyl ketone peroxide and cobalt naphthenate with respect to the total weight of the unsaturated polyester resin and the styrene to obtain a resin composition, which in turn was cast-molded under conditions of precuring at 25°C for 2 hours and postcuring at 70°C for 2 hours. The molding as obtained exhibited bending strength of 132.2 MPa, while a molding of-the aforementioned "Polylite 210M" exhibited bending strength of 92.1 MPa.

### (Example 14) Synthesis of Recycled Unsaturated Polyester Resin

The propylene glycol degradation product (degradation product of 4.6305 g in propylene glycol of 40 g; 0.525 mol) obtained in Example 11 were neutralized with hydrochloric acid, 20.6 g (0.210 mol) of maleic anhydride and 52.3 g (0.315 mol) of terephthalic acid discharged in reduction of polyester fiber were added thereto, water was distilled away under nitrogen, and the mixture was reacted under 210°C for 4 hours, to obtain 69.5 g of recycled unsaturated polyester resin. Through GPC, values of number-average molecular weight and (weight-average molecular weight)/(number-average molecular weight) of the resin as obtained were 1,500 and 2.00 respectively.

### (Example 15) Recycling of Glass Fiber

50 g of unsaturated polyester resin "Polylite BS210M" by Dainippon Ink and Chemicals, Inc., containing 30 to 40 % of styrene, was prepared with addition of 1 % each of methyl ethyl ketone peroxide and cobalt naphthanate with respect to the weight of the "Polylite BS210M" and 15 g of the glass fiber recovered in Example 8, to obtain a composite resin composition. This composite resin composition was cast-molded under conditions of precuring at 25°C for 2 hours and postcuring at 70°C for 2 hours. The molding as obtained exhibited bending strength of 140 MPa. For the purpose of comparison, it is pointed out that a mixture prepared in the aforementioned manner with no addition of the glass fiber and a commercially available FRP tank containing 30 % of glass fiber exhibited bending strength values of 92.1 MPa and 134 MPa respectively.

### (Example 16) Synthesis of Recycled Polyurethane Resin

50 g of the ethylene glycol degradation product obtained in Example 3 was neutralized with hydrochloric acid, and 0.05 g of triethylenediamine and 0.15 g of tin octenate (II) were added to and mixed with the same. 25 g of toluene diisocyanate was added to and further mixed with this mixture, which in turn was reacted at 100°C for 1 hour, to obtain polyurethane resin.

### (B) Examples on Degradation Under Pressure

In the following Examples 17 to 25 and comparative examples 1 and 2, chippings of buttons consisting of unsaturated polyester resin were crushed into 3 mm in grain size by a rotary cutter mill "Granulaters U-140" (by HORAI CO., LTD.) and further into 100 meshes by a high-speed hammer mill (by Yoshida Seisakusho Co., Ltd.), for preparing samples.

On the other hand, shavings of the buttons were employed for degradation with glycol as such.

Comparative examples 1 and 2 are thus named in comparison with Examples of degradation under pressures, although the same are inventive examples.

### (Example 17) Degradation with NaOH Catalyst under Pressure

2 g of unsaturated polyester resin waste (chippings), 20 g of ethylene glycol, and 0.2 g of sodium hydroxide were introduced into a vessel of Portable reactor TVS-N2 (cap bolt system) (by Taiatsu Corporation), and treated at 250°C for 5 hours. The reactant obtained by such treatment was filtered, washed with water and THF, and dried. 0.7683 g of remainder resin was obtained after the drying, with a degradation rate of 61.6 %.

The molecular weight of the degradation product was measured through GPC similarly to Example 1. In result, number-average molecular weight and (weight-average molecular weight)/(number-average molecular weight) were 269 and 1.24 respectively at a peak 1 of the degradation product. At a peak 2 of the degradation product, on the other hand, number-average molecular weight and (weight-average molecular weight)/(number-average molecular weight) were 229 and 1.01 respectively. At a peak 3 of the degradation product, further, number-average molecular weight and (weight-average molecular weight)/(number-average molecular weight) were 141 and 1.03 respectively. At the total peak of the degradation product, number-average molecular weight and (weight-average molecular weight)/(number-average molecular weight) were 182 and 1.39 respectively.

### (Example 18) Degradation with NaOH Catalyst under Pressure

2 g of unsaturated polyester resin waste (chippings), 20 g of ethylene glycol, and 0.2 g of sodium hydroxide were introduced into a vessel which was similar to that of Example 17, and treated at 270°C for 3 hours. The reactant obtained by such treatment was filtered, washed with water and THF, and dried. 0.7579 g of remainder resin was obtained after the drying, with a degradation rate of 62.10 %.

### (Example 19) Degradation with NaOH Catalyst under Pressure

2 g of unsaturated polyester resin waste (chippings), 20 g of ethylene glycol, and 0.2 g of sodium hydroxide were introduced into a vessel which was similar to that of Example 17, and treated at 280°C for 3 hours. The reactant obtained by such treatment was filtered, washed with water and THF, and dried. 0.7213 g of remainder resin was obtained after the drying, with a degradation rate of 63.94 %.

### (Example 20) Degradation with NaOH Catalyst under Pressure

2 g of unsaturated polyester resin waste (chippings), 20 g of ethylene glycol, and 0.2 g of sodium hydroxide were introduced into a vessel which was similar to that of Example 17, and treated at 290°C for 3 hours. The reactant obtained by such treatment was filtered, washed with water and THF, and dried. 0.4891 g of remainder resin was obtained after the drying, with a degradation rate of 75.55 %.

The molecular weight of the degradation product was measured through GPC similarly to Example 1. In result, number-average molecular weight and (weight-average molecular weight)/(number-average molecular weight) were 235 and 1.01 respectively at a peak 1 of the degradation product. At a peak 2 of the degradation product, number-average molecular weight and (weight-average molecular weight)/(number-average molecular weight) were 156 and 1.02 respectively. At the total peak of the degradation product, number-average molecular weight and (weight-average molecular weight)/(number-average molecular weight) were 156 and 1.06 respectively.

### (Comparative Example 1) Degradation with NaOH Catalyst Under Atmosphere

10 g of unsaturated polyester resin waste (chippings), 40 g of ethylene glycol, and 2 g of sodium hydroxide were introduced into a 1L three-necked round bottom flask provided with a stirrer and a cooler which was similar to that of Example 1, and treated at 200°C for 9 hours. The reactant obtained by such treatment was filtered, washed with THF, and dried. 4.2357 g of remainder resin was filtered out, with a degradation rate of 47.64 %.

### (Example 21) Degradation of FRP with NaOH Catalyst under Pressure

2 g of FRP waste, 20 g of ethylene glycol, and 0.2 g of sodium hydroxide were introduced into a vessel which was similar to that of Example 17, and treated at 290°C for 7 hours. The reactant obtained by such treatment was filtered, washed with water and THF, and dried. 0.7055 g of remainder resin was obtained after the drying including glass fiber, with a degradation rate of 64.73 % with respect to the waste FRP.

The molecular weight of the degradation product was measured through GPC similarly to Example 1. In result, number-average molecular weight and (weight-average molecular weight)/(number-average molecular weight) were 243 and 1.05 respectively at a peak 1 of the degradation product. At a peak 2 of the degradation product, number-average molecular weight and (weight-average molecular weight)/(number-average molecular weight) were 131 and 1.01 respectively. At the total peak of the degradation product, number-average molecular weight and (weight-average molecular weight)/(number-average molecular weight) were 190 and 1.13 respectively.

### (Comparative Example 2) Degradation of FRP with NaOH Catalyst Under Atmosphere

100 g of FRP waste, 150 g of ethylene glycol, and 1 g of sodium hydroxide were introduced into a 1L three-necked round bottom flask provided with a stirrer and a cooler which was similar to that of Example 1, and treated at 200°C for 14 hours. The reactant obtained by such treatment was filtered, washed with THF, and dried. 76.52 g of remainder resin was filtered out, with a degradation rate of 23.43 %.

### (Example 22) Degradation with MgO Catalyst under Pressure

2 g of unsaturated polyester resin waste (chippings), 20 g of ethylene glycol, and 0.2 g of magnesium hydroxide were introduced into a vessel which was similar to that of Example 17, and treated at 250°C for 5 hours. The reactant obtained by such treatment was filtered, washed with diluted hydrochloric acid and THF, and dried. 0.8458 g of remainder resin was obtained after the drying, with a degradation rate of 57.71 %.

### (Example 23) Degradation with BaO Catalyst under Pressure

2 g of unsaturated polyester resin waste (chippings), 20 g of ethylene glycol, and 0.2 g of barium oxide were introduced into a vessel which was similar to that of Example 17, and treated at 250°C for 5 hours. The reactant obtained by such treatment was filtered, washed with diluted hydrochloric acid and THF, and dried. 0.8967 g of remainder resin was obtained after the drying, with a degradation rate of 55.17 %.

### (Example 24) Degradation with CaO Catalyst under Pressure

2 g of unsaturated polyester resin waste (chippings), 20 g of ethylene glycol, and 0.2 g of calcium oxide were introduced into a vessel which was similar to that of Example 17, and treated at 250°C for 5 hours. The reactant obtained by such treatment was filtered, washed with diluted hydrochloric acid and THF, and dried. 0.8924 g of remainder resin was obtained after the drying, with a degradation rate of 55.38 %.

### (Example 25) Degradation with Zinc Acetate Catalyst under Pressure

2 g of unsaturated polyester resin waste (chippings), 20 g of ethylene glycol, and 0.2 g of zinc acetate were introduced into a vessel which was similar to that of Example 17, and treated at 250°C for 5 hours. The reactant obtained by such treatment was filtered, washed with diluted-hydrochloric acid and THF, and dried. 0.9600 g of remainder resin was obtained after the drying, with a degradation rate of 51.97 %.

### (C) Examples Employing Apparatus of Stainless

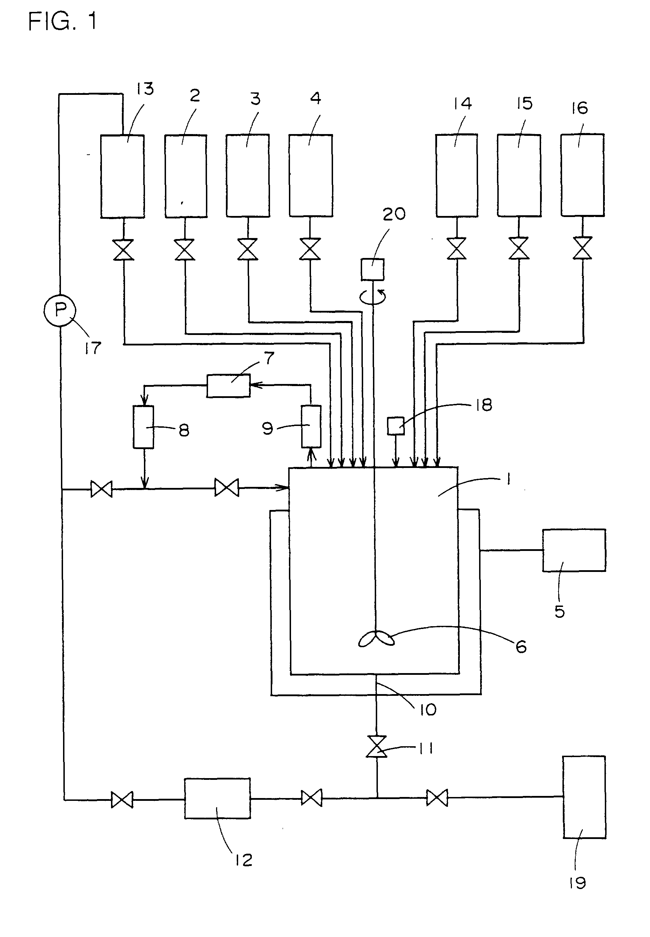

Fig. 1 schematically illustrates the structure of an exemplary recycling apparatus for unsaturated polyester resin waste according to the present invention.

Referring to Fig. 1, this apparatus comprises a stainless 100L reaction vessel 1 which is closable, a first tank 2 storing glycol to be injected into the reaction vessel 1, a second tank 3 storing sodium hydroxide to be injected into the reaction vessel 1, and a third tank 4 for storing unsaturated polyester resin waste to be injected into the reaction vessel 1.

The reaction vessel 1 is provided with a heating and cooling medium boiler 5 for heating the reaction vessel 1, and a stirrer 6 which is rotated by a motor 20 for stirring a reacted solution in the reaction vessel 1.

The reaction vessel 1 is further provided with a cooler 7 for liquefying volatile components which are generated in the reaction vessel 1, and a receiver 8 for receiving the liquid resulting from such liquefaction by the cooler 7.

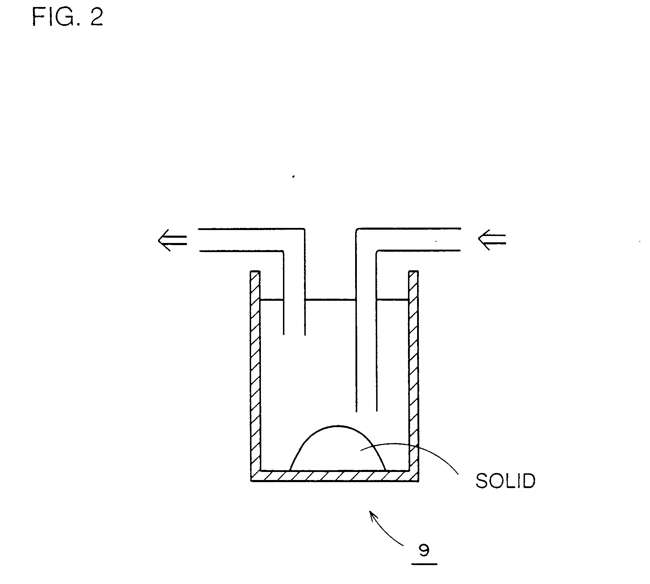

The volatile components generated in the reaction vessel 1 include a sublimable component such as phthalic acid, which may be solidified to block a tube portion of the cooler 7 when the same is directly fed into the cooler 7. In this apparatus, therefore, a trap 9 is provided in a path connecting the reaction vessel 1 with the cooler 7. This trap 9 is structured as shown in Fig. 2, for removing the sublimable component such as phthalic acid.

The reaction vessel 1 is further provided with an outlet port 10 for taking out a degradation liquid resulting from degradation reaction in the reaction vessel 1.

This apparatus further comprises a centrifugal separator 12 for removing an unreactant and a filler such as glass fiber from the degradation liquid which is taken out from the outlet port 10.

In addition, this apparatus further comprises a fourth tank 13 storing the degradation liquid, which is subjected to removal of precipitates by centrifugation, for injecting the same into the reaction vessel 1 again for making re-synthesis reaction, a fifth tank 14 storing maleic anhydride to be injected into the reaction vessel 1, a sixth tank 15 storing phthalic anhydride to be injected into the reaction vessel 1, a seventh tank 16 storing styrene to be injected into the reaction vessel 1, and a nitrogen inlet tube 18 for introducing nitrogen gas into the reaction vessel 1 which is under re-synthesis reaction.

Through the recycling apparatus having the aforementioned structure, degradation and re-synthesis reaction of unsaturated polyester resin waste are carried out as follows:

First, glycol is injected into the reaction vessel 1 from the first tank 2, and thereafter cooling water is fed to drive the cooler 7. Volatile components which are generated during reaction are liquefied by the cooler 7, and collected in the receiver 8. The liquid collected in the receiver 8 is properly returned into the reaction vessel 1. A sublimable component such as phthalic acid is removed by the trap 9 before the same reaches the cooler 7.

Then, the stirrer 6 is rotated by the motor 20, to start stirring the solution contained in the reaction vessel 1. Then, sodium hydroxide for serving as a catalyst is injected into the reaction vessel 1 from the second tank 3, and thereafter the reaction vessel 1 is heated by the heating medium boiler 5. Then, unsaturated polyester resin waste is introduced into the reaction vessel 1 from the third tank 4, to make degradation reaction.

After completion of the degradation reaction, the heating medium boiler 5 is switched to cooling, for cooling the reaction vessel 1 to a prescribed temperature. Then, a valve 11 is opened to take out the degradation liquid from the reaction vessel 1 through the outlet port 10. The degradation liquid as taken out is centrifuged by the centrifugal separator 12 for removal of precipitates, and thereafter fed to the fourth tank 13 by a pump 17.

The degradation liquid resulting from the aforementioned degradation reaction is again injected into the reaction vessel 1, for re-synthesis reaction.

Then, maleic anhydride is injected into the reaction vessel 1 from the fifth tank 14, and phthalic anhydride is further injected from the sixth tank 15. Then, the reaction vessel 1 is heated by the heating medium boiler 5, to make re-synthesis reaction. In the re-synthesis reaction, nitrogen gas is introduced into the reaction vessel 1 through the nitrogen inlet tube 18, so that the reacted solution is stirred by the stirrer 6.

After reaction, the reaction vessel 1 is cooled and styrene is injected into the same from the seventh tank 16, to obtain recycled unsaturated polyester resin. This recycled resin is stored in a tank 19.

Description is now made on Examples of degradation and re-synthesis carried out through this apparatus.

In the following Examples 26 to 30, chippings of buttons consisting of unsaturated polyester resin were crushed into 3 mm in grain size by a rotary cutter mill "Granulaters U-140" (by HORAI CO., LTD.) and further into 100 meshes by a high-speed hammer mill (by Yoshida Seisakusho Co., Ltd.) for preparing samples.

On the other hand, shavings of the buttons were employed for degradation with glycol as such.

### (Example 26) Degradation with Ethylene Glycol in Apparatus of Stainless

40 kg of ethylene glycol was introduced into the stainless 100L reaction vessel 1 from the chemical injection tank 2, and cooling water was fed to drive the cooler 7 while the stirrer 6 was rotated to start stirring at 24 rpm.

Then, 800 g of sodium hydroxide was introduced into the reaction vessel 1 from the chemical injection tank 3, and the temperature was increased by the heating medium boiler 5. Then, 20 kg of unsaturated polyester button shavings were introduced into the reaction vessel 1 from the tank 4.

After the temperature was raised up to 197°C, treatment was made for 4 hours and 40 minutes. After reaction, the heating medium boiler 5 was switched to cooling for cooling the reaction vessel 1 to 150°C, and thereafter the valve 11 provided on the lower portion of the reaction vessel 1 was opened to remove undegraded materials by the centrifugal separator 12. A degradation liquid of 43.45 kg was obtained, with a degradation rate of 17.25 %.

The molecular weight of the degradation product was measured through GPC similarly to Example 1. In result, number-average molecular weight and (weight-average molecular weight)/(number-average molecular weight) were 247 and 1.05 respectively at a peak 1 of the degradation product. At a peak 2 of the degradation product, number-average molecular weight and (weight-average molecular weight)/(number-average molecular weight) were 147 and 1.03 respectively. At the total peak of the degradation product, number-average molecular weight and (weight-average molecular weight)/(number-average molecular weight) were 201 and 1.12 respectively.

### (Example 27) Degradation with Diethylene Glycol in Apparatus of Stainless

50 kg of diethylene glycol was introduced into the stainless 100L reaction vessel 1 from the chemical injection tank 2, and cooling water was fed to drive the cooler 7 while the stirrer 6 was rotated to start stirring at 24 rpm.

Then, 800 g of sodium hydroxide was introduced into the reaction vessel 1 from the chemical injection tank 3, and the temperature was increased by the heating medium boiler 5. Then, 30 kg of unsaturated polyester button shavings were introduced into the reaction vessel 1 from the tank 4.

After the temperature was raised up to 230°C, treatment was made for 10 hours. After reaction, the heating medium boiler 5 was switched to cooling for cooling the reaction vessel 1 to 150°C, and thereafter the valve 11 provided on the lower portion of the reaction vessel 1 was opened to remove undegraded materials by the centrifugal separator 12. A degradation liquid of 73.95 kg was obtained, with a degradation rate of 79.83 %.

The molecular weight of the degradation product was measured through GPC similarly to Example 1. In result, number-average molecular weight and (weight-average molecular weight)/(number-average molecular weight) were 2,084 and 1.14 respectively at a peak 1 of the degradation product. At a peak 2 of the degradation product, number-average molecular weight and (weight-average molecular weight)/(number-average molecular weight) were 300 and 1.02 respectively. At a peak 3 of the degradation product, number-average molecular weight and (weight-average molecular weight)/(number-average molecular weight) were 155 and 1.02 respectively. At the total peak of the degradation product, number-average molecular weight and (weight-average molecular weight)/(number-average molecular weight) were 333 and 2.93 respectively.

### (Example 28) Degradation with Triethylene Glycol in Apparatus of Stainless

50 kg of triethylene glycol was introduced into the stainless 100L reaction vessel 1 from the chemical injection tank 2, and cooling water was fed to drive the cooler 7 while the stirrer 6 was rotated to start stirring at 24 rpm.

Then, 800 g of sodium hydroxide was introduced into the reaction vessel 1 from the chemical injection tank 3, and the temperature was increased by the heating medium boiler 5. Then, 29 kg of unsaturated polyester button shavings were introduced into the reaction vessel 1 from the tank 4.

After the temperature was raised up to 250°C, treatment was made for 5 hours. After reaction, the heating medium boiler 5 was switched to cooling for cooling the reaction vessel 1 to 150°C, and thereafter the valve 11 provided on the lower portion of the reaction vessel 1 was opened to remove undegraded materials by the centrifugal separator 12. A degradation liquid of 72.6 kg was obtained, with a degradation rate of 77.93 %.

The molecular weight of the degradation product was measured through GPC similarly to Example 1. In result, number-average molecular weight and (weight-average molecular weight)/(number-average molecular weight) were 2,744 and 1.16 respectively at a peak 1 of the degradation product. At a peak 2 of the degradation product, number-average molecular weight and (weight-average molecular weight)/(number-average molecular weight) were 893 and 1.05 respectively. At a peak 3 of the degradation product, number-average molecular weight and (weight-average molecular weight)/(number-average molecular weight) were 462 and 1.03 respectively. At the total peak of the degradation product, number-average molecular weight and (weight-average molecular weight)/(number-average molecular weight) were 586 and 1.53 respectively.

### (Example 29) Re-Synthesis of Unsaturated Polyester Resin

40 kg of the ethylene glycol degradation product obtained in Example 26 (ethylene glycol equivalent: 10.75 mol/kg, analyzed by phthalation in Bunseki Kagaku Binran, edited by The Japan Society for Analytical Chemistry, p. 316 (1971), by Maruzen Co., Ltd.) was introduced into the reaction vessel 1 from the chemical injection tank 13, and neutralized with hydrochloric acid. Then, 16.9 kg of maleic anhydride was injected into the reaction vessel 1 from the chemical injection tank 14, and 38.2 kg of phthalic anhydride was added from the chemical injection tank 15. Nitrogen gas was fed at 60 L/h. from the nitrogen inlet tube 18, and stirring was made by the stirrer at 84 rpm while resulting water was distilled away by heating, and reaction was made at 210°C for 4 hours.

Thereafter the reaction vessel 1 was cooled to 80°C, and 13.6 g of hydroquinone and 37.4 kg of styrene were added from the chemical injection tank 16. Thus, recycled unsaturated polyester resin of 124.8 kg was obtained. This recycled resin was stored in the tank 19.

The molecular weight of the resin as obtained was measured through GPC similarly to Example 1. In result, number-average molecular weight and (weight-average molecular weight)/(number-average molecular weight) were 1,274 and 1.62 respectively. For reference, it is pointed out that "Polylite 210M" by Dainippon Ink and Chemicals, Inc. has number-average molecular weight and (weight-average molecular weight)/(number-average molecular weight) of 1,646 and 3.26 respectively.

### (Example 30) Re-Synthesis of Unsaturated Polyester Resin

60 kg of the triethylene glycol degradation product obtained in Example 28 (ethylene glycol equivalent: 2.25 mol/kg, analyzed by phthalation in Bunseki Kagaku Binran, edited by The Japan Society for Analytical Chemistry, p. 316 (1971), by Maruzen Co., Ltd.) was introduced into the reaction vessel 1 from the chemical injection tank 13, and neutralized with acetic acid. Then, 13.24 kg of maleic anhydride was injected into the reaction vessel 1 from the chemical injection tank 14. Nitrogen gas was fed at 60 L/h. from the nitrogen inlet tube 18, and stirring was made by the stirrer 6 at 84 rpm while resulting water was distilled away by heating, and reaction was made at 200°C for 3 hours.

Thereafter the reaction vessel 1 was cooled to 80°C, and 10.10 g of hydroquinone and 30.35 kg of styrene were added from the chemical injection tank 16. Thus, recycled unsaturated polyester resin of 101.2 kg was obtained. This recycled resin was stored in the tank 19.

The molecular weight of the resin as obtained was measured through GPC similarly to Example 1. In result, number-average molecular weight and (weight-average molecular weight)/(number-average molecular weight) were 906 and 1.61 respectively. For reference, it is pointed out that "Polylite 210M" by Dainippon Ink and Chemicals, Inc. has number-average molecular weight and (weight-average molecular weight)/(number-average molecular weight) of 1,646 and 3.26 respectively.

## Claims

1. A method of recycling unsaturated polyester resin waste, comprising the steps of:
preparing unsaturated polyester resin waste; and degrading said unsaturated polyester resin waste with glycol, thereby obtaining glycolic raw material.

2. A method of recycling waste of a fiber reinforced plastic product which comprises an unsaturated polyester resin containing glass fiber, the method comprising the steps of:
preparing unsaturated polyester resin waste; and
degrading said waste with glycol, thereby obtaining glycolic raw material.

3. A method according to Claim 1 or 2, wherein said step of preparing said unsaturated polyester resin waste includes a step of crushing said unsaturated polyester resin waste.

4. A method according to any preceding claim, wherein said step of preparing said unsaturated polyester resin waste further includes a step of screening crushed said unsaturated polyester resin waste.

5. A method according to Claim 4, wherein a screen having meshes of not more than 300 µm is employed in said screening step.

6. A method according to any preceding claim wherein said step of degrading said unsaturated polyester resin waste with glycol includes a step of adding glycol to said unsaturated polyester resin waste.

7. A method according to claim 6, wherein said glycol includes one selected from ethylene glycol, propylene glycol, diethylene glycol, dipropylene glycol, neopentyl glycol, 1,3-butanediole, 1,6-hexanediole, bisphenol A hydride, bisphenol A propylene oxide adduct, and dibromoneopentyl glycol.

8. A method according to claim 6 or 7, wherein said step of degrading said unsaturated polyester resin waste with resin further includes a step of adding a catalyst to said unsaturated polyester resin waste.

9. A method according to claim 8, wherein said catalyst includes one selected from sodium methylate, sodium ethylate, sodium hydroxide, methanesulfonic acid and metal acetate.

10. A method according to any preceding claim, further comprising a step of synthesizing unsaturated polyester resin by reacting said glycolic raw material with dibasic acid.

11. A method according to Claim 10, wherein said dibasic acid includes unsaturated dibasic acid selected from maleic anhydride, fumaric acid and itaconic acid, and saturated dibasic acid selected from the group consisting of phthalic anhydride, isophthalic acid, terephthalic acid, tetrahydrophthalic anhydride, methyltetrahydrophthalic anhydride, endomethylenetetrahydrophthalic anhydride, adipic acid, sebacic acid, chlorendic acid (1,4,5,6,7,7-hexachlorobicyclo [2,2,1]-5-heptene-2,3-dicarboxylic acid), and tetrabromophthalic anhydride.

12. A method according to any one on claims 1 to 9 further comprising a step of synthesizing polyurethane resin by reacting said glycolic raw material with a diisocyanate compound.

13. A method according to claim 12, wherein said diisocyanate compound includes one selected from toluene diisocyanate, diphenylmethane diisocyanate (MDI), naphthalene diisocyanate, tolidine diisocyanate, hexamethylene diisocyanate, isophorone diisocyanate, p-phenylene diisocyante, transcyclohexane 1,4-diisocyanate, xylylene diisocyanate (XDI), hydrogeneration XDI, hydrogeneration MDI, lysine diisocyanate and tetramethylxylene diisocyanate.

14. A method according to any one of claims 10 to 13, further comprising a step of feeding nitrogen gas for reacting said glycolic raw material with said dibasic acid or diisocyanate compound.

15. A method according to any of claims 2 to 14, wherein the unsaturated polyester resin waste is degraded with glycol at a temperature of from 150° to 250°C.

16. An apparatus for degrading unsaturated polyester resin waste, comprising:
a reaction vessel of stainless steel;
first injection means for injecting glycol into said reaction vessel;
second injection means for injecting a catalyst into said reaction vessel;
third injection means for injecting unsaturated polyester resin waste into said reaction vessel;
heating means for heating said reaction vessel;
cooling means for cooling said reaction vessel;
a stirrer for stirring a reacted solution in said reaction vessel;
a cooler for liquefying volatile components, including a subliming component, being generated in said reaction vessel;
a trap being provided in a path connecting said reaction vessel with said cooler for removing said subliming component being generated in said reaction vessel; and
an outlet port being provided in said reaction vessel for taking out a degradation liquid resulting from degradation reaction in said reaction vessel.

17. An apparatus for recycling unsaturated polyester resin waste, comprising:
a reaction vessel of stainless steel;
first injection means for injecting glycol into said reaction vessel;
second injection means for injecting a catalyst into said reaction vessel;
third injection means for injecting unsaturated polyester resin waste into said reaction vessel;
heating means for heating said reaction vessel;
cooling means for cooling said reaction vessel;
a stirrer for stirring a reacted solution in said reaction vessel;
a cooler for liquefying volatile components, including a subliming component, being generated in said reaction vessel;
a trap being provided in a path connecting said reaction vessel with said cooler for removing said subliming component being generated in said reaction vessel;
an outlet port being provided in said reaction vessel for taking out a degradation liquid resulting from degradation reaction in said reaction vessel;
a centrifugal separator for centrifuging said degradation liquid being taken out from said outlet port;
fourth injection means for re-injecting said degradation liquid, being subjected to removal of precipitates by centrifugation through said centrifugal separator, into said reaction vessel for re-synthesis reaction;
fifth injection means for injecting maleic anhydride into said reaction vessel;
sixth injection means for injecting phthalic anhydride into said reaction vessel;
seventh injection means for injecting styrene into said reaction vessel; and
a nitrogen inlet tube for introducing nitrogen gas into said reaction vessel being under re-synthesis reaction,
for re-synthesizing recycled unsaturated polyester resin in said reaction vessel while carrying out heating by said heating means and stirring by said stirrer.

18. Apparatus according to claim 16 or claim 17, wherein said reaction vessel is closable.

19. Use of apparatus as claimed in any one of claims 16 to 18, for recycling unsaturated polyester resin waste which includes waste of a fiber reinforced plastic product containing glass fiber.

## Patentansprüche

1. Verfahren zum Recycling von ungesättigtem Polyesterharz-Abfall, folgende Schritte umfassend:
das Aufbereiten von ungesättigtem Polyesterharz-Abfall; und das Abbauen des ungesättigten Polyesterharz-Abfalls mit Glykol, wodurch Glykol-Rohmaterial erhalten wird.

2. Verfahren zum Recycling eines faserverstärkten Kunststoffprodukts, das ein glasfaserhältiges ungesättigtes Polyesterharz umfasst, wobei das Verfahren folgende Schritte umfasst:
das Aufbereiten von ungesättigtem Polyesterharz-Abfall; und das Abbauen des Abfalls mit Glykol, wodurch Glykol-Rohmaterial erhalten wird.

3. Verfahren nach Anspruch 1 oder 2, worin der Schritt des Aufbereitens des ungesättigten Polyesterharz-Abfalls einen Schritt des Zerkleinerns des ungesättigten Polyesterharz-Abfalls umfasst.

4. Verfahren nach einem der vorangegangenen Ansprüche, worin der Schritt des Aufbereitens des ungesättigten Polyesterharz-Abfalls weiters einen Schritt des Siebens des zerkleinerten ungesättigten Polyesterharz-Abfalls umfasst.

5. Verfahren nach Anspruch 4, worin im Siebschritt ein Sieb mit einer Maschenweite von nicht mehr als 300 *µ*m eingesetzt wird.

6. Verfahren nach einem der vorangegangenen Ansprüche, worin der Schritt des Abbauens des ungesättigten Polyesterharz-Abfalls mit Glykol einen Schritt der Zugabe von Glykol zum ungesättigten Polyesterharz-Abfall umfasst.

7. Verfahren nach Anspruch 6, worin das Glykol eines umfasst, das aus Ethylenglykol, Propylenglykol, Diethylenglykol, Dipropylenglykol, Neopentylglykol, 1,3-Butandiol, 1,6-Hexandiol, Bisphenol A-Hydrid, Bisphenol A-Propylenoxid-Addukt und Dibromneopentylglykol ausgewählt ist.

8. Verfahren nach Anspruch 6 oder 7, worin der Schritt des Abbauens des ungesättigten Polyesterharz-Abfalls mit Glykol weiters einen Schritt der Zugabe eines Katalysators zum ungesättigten Polyesterharz-Abfall umfasst.

9. Verfahren nach Anspruch 8, worin der Katalysator einen umfasst, der aus Natriummethylat, Natriumethylat, Natriumhydroxid, Methansulfonsäure und Metallacetat ausgewählt ist.

10. Verfahren nach einem der vorangegangenen Ansprüche, weiters umfassend einen Schritt des Synthetisierens von ungesättigtem Polyesterharz durch Umsetzen des Glykol-Rohmaterials mit zweibasiger Säure.

11. Verfahren nach Anspruch 10, worin die zweibasige Säure eine ungesättigte zweibasige Säure, die aus Maleinsäureanhydrid, Fumarsäure und ltaconsäure ausgewählt ist, sowie eine gesättigte zweibasige Säure umfasst, die aus der aus Phthalsäureanhydrid, Isophthalsäure, Terephthalsäure, Tetrahydrophthalsäureanhydrid, Methyltetrahydrophthalsäureanhydrid, Endomethylentetrahydrophthalsäureanhydrid, Adipinsäure, Sebacinsäure, Het-Säure (1,4,5,6,7,7-Hexachlorbicyclo-[2,2,1]-5-hepten-2,3-dicarbonsäure) und Tetrabromphthalsäureanhydrid bestehenden Gruppe ausgewählt ist.

12. Verfahren nach einem der Ansprüche 1 bis 9, das weiters einen Schritt des Synthetisierens von Polyurethanharz durch Umsetzen des Glykol-Rohmaterials mit einer Diisocyanatverbindung umfasst.

13. Verfahren nach Anspruch 12, worin die Diisocyanatverbindung eine umfasst, die aus Toluoldiisocyanat, Diphenylmethandiisocyanat (MDI), Naphthalindiisocyanat, Toluidindiisocyanat, Hexamethylendiisocyanat, Isophorondiisocyanat, p-Phenylendiisocyanat, trans-Cyclohexan-1,4-diisocyanat, Xylylendiisocyanat (XDI), hydriertes XDI, hydriertes MDI, Lysindiisocyanat und Tetramethylxyloldiisocyanat ausgewählt ist.

14. Verfahren nach einem der Ansprüche 10 bis 13, weiters umfassend einen Schritt des Zuführens von Stickstoffgas, um das Glykol-Rohmaterial mit der zweibasigen Säure oder der Diisocyanatverbindung umzusetzen.

15. Verfahren nach einem der Ansprüche 2 bis 14, worin der ungesättigte Polyesterharz-Abfall mit Glykol bei einer Temperatur von 150 bis 250 °C abgebaut wird.

16. Vorrichtung zum Abbauen von ungesättigtem Polyesterharz-Abfall, umfassend:
ein Reaktionsgefäß aus Edelstahl;
erste Einspritzmittel zum Einspritzen von Glykol in das Reaktionsgefäß;
zweite Einspritzmittel zum Einspritzen eines Katalysators in das Reaktionsgefäß;
dritte Einspritzmittel zum Einspritzen von ungestättigtem Polyeserharz-Abfall in das Reaktiongefäß;
Heizmittel zum Aufheizen des Reaktionsgefäßes;
Kühlmittel zum Abkühlen des Reaktionsgefäßes;
einen Rührer zum Rühren einer Reaktionslösung im Reaktionsgefäß;
einen Kühler zum Verflüssigen flüchtiger Komponenten, einschließlich von sublimierenden Komponenten, die im Reaktionsgefäß gebildet werden;
eine Kühlfalle, die in einem Strömungsweg vorgesehen ist, der das Reaktionsgefäß mit dem Kühler verbindet, um die im Reaktionsgefäß gebildeten sublimierenden Komponenten zu entfernen; und
eine im Reaktionsgefäß vorgesehene Auslassöffnung, um Abbauproduktlösung zu entnehmen, das aus der Abbaureaktion im Reaktionsgefäß resultiert.

17. Vorrichtung zum Recycling von ungesättigtem Polyesterharz Abfall, umfassend:
ein Reaktionsgefäß aus Edelstahl;
erste Einspritzmittel zum Einspritzen von Glykol in das Reaktionsgefäß;
zweite Einspritzmittel zum Einspritzen eines Katalysators in das Reaktionsgefäß;
dritte Einspritzmittel zum Einspritzen von ungesättigtem Polyesterharz-Abfall in das Reaktionsgefäß;
Heizmittel zum Aufheizen des Reaktionsgefäßes;
Kühlmittel zum Abkühlen des Reaktionsgefäßes;
einen Rührer zum Rühren einer Reaktionslösung im Reaktionsgefäß;
einen Kühler zum Verflüssigen flüchtiger Komponenten, einschließlich von sublimierenden Komponenten, die im Reaktionsgefäß gebildet werden;
eine Kühlfalle, die in einem Strömungsweg vorgesehen ist, der das Reaktionsgefäß mit dem Kühler verbindet, um die im Reaktionsgefäß gebildeten sublimierenden Komponenten zu entfernen;
eine im Reaktionsgefäß vorgesehene Auslassöffnung, um Abbauproduktlösung zu entnehmen, das aus der Abbaureaktion im Reaktionsgefäß resultiert;
einen Zentrifugalabscheider zum Zentrifugieren der Abbauproduktlösung, die aus der Auslassöffnung entnommen wird;
vierte Einspritzmittel zum Wiedereinspritzen der Abbauproduktlösung, die einer Entfernung von Niederschlägen durch Zentrifugation durch den Zentrifugalabscheider unterzogen wurde, in das Reaktionsgefäß zur Resynthesereaktion;
fünfte Einspritzmittel zum Einspritzen von Maleinsäureanyhdrid in das Reaktionsgefäß;
sechste Einspritzmittel zum Einspritzen von Phthalsäureanhydrid in das Reaktionsgefäß;
siebente Einspritzmittel zum Einspritzen von Styrol in das Reaktionsgefäß; und
ein Stickstoff-Einleitrohr zum Einleiten von Stickstoffgas in das Reaktionsgefäß, während die Resynthesereaktion abläuft;
um rezykliertes ungesättigtes Polyesterharz im Reaktionsgefäß zu resynthetisieren, während mit dem Heizmittel erhitzt und mit dem Rührer gerührt wird.

18. Vorrichtung nach Anspruch 16 oder 17, worin das Reaktionsgefäß verschließbar ist.

19. Verwendung einer Vorrichtung nach einem der Ansprüche 16 bis 18 zum Recycling von ungesättigtem Polyesterharz-Abfall, der Abfall eines faserverstärkten glasfaserhältigen Kunststoffprodukts umfasst.

## Revendications

1. Méthode de recyclage de déchets de résine de polyester insaturé, comprenant les étapes de :
préparer des déchets de résine de polyester insaturé; et dégrader lesdits déchets de résine de polyester insaturé avec du glycol pour ainsi obtenir une matière première glycolique.

2. Méthode de recyclage de déchets d'un produit de plastique renforcé de fibres qui comprend une résine de polyester insaturé contenant de la fibre de verre, la méthode comprenant les étapes de:
préparer des déchets de résine de polyester insaturé; et
dégrader lesdits déchets avec du glycol pour ainsi obtenir une matière première glycolique.

3. Méthode selon la revendication 1 ou 2, où ladite étape de préparer lesdits déchets de résine de polyester insaturé comprend une étape de broyer lesdits déchets de résine de polyester insaturé.

4. Méthode selon toute revendication précédente, où ladite étape de préparer lesdits déchets de résine de polyester insaturé comprend de plus une étape de criblage desdits déchets de résine de polyester insaturé broyés.

5. Méthode selon la revendication 4, où un tamis ayant des mailles de pas plus de 300 µm est employé dans ladite étape de criblage.

6. Méthode selon toute revendication précédente, où ladite étape de dégrader lesdits déchets de résine de polyester insaturé avec du glycol comprend une étape d'ajouter du glycol auxdits déchets de résine de polyester insaturé.

7. Méthode selon la revendication 6, où ledit glycol comprend un sélectionné parmi éthylène glycol, propylène glycol, diéthylène glycol, dipropylène glycol, néopentyl glycol, 1,3-butanediol, 1,6-hexanediol, hydrure de bisphénol A, produit d'addition d'oxyde de propylène de bisphénol A et dibromonéopentyl glycol.

8. Méthode selon la revendication 6 ou 7, où ladite étape de dégrader lesdits déchets de résine de polyester insaturé avec une résine comprend de plus une étape d'ajouter un catalyseur auxdits déchets de résine de polyester insaturé.

9. Méthode selon la revendication 8, où ledit catalyseur en comprend un sélectionné parmi méthylate de sodium, éthylate de sodium, hydroxyde de sodium, acide méthanesulfonique et acétate de métal.

10. Méthode selon toute revendication précédente, comprenant de plus une étape de synthèse de la résine de polyester insaturée par réaction de ladite matière première glycolique avec un acide dibasique.

11. Méthode selon la revendication 10, où ledit acide dibasique comprend un acide dibasique insaturé sélectionné parmi anhydride maléique, acide fumarique et acide itaconique, et acide dibasique saturé sélectionné dans le groupe consistant en anhydride phtalique, acide isophtalique, acide téréphtalique, anhydride tétrahydrophtalique, anhydride méthyltétrahydrophtalique, anhydride endométhylènetétrahydrophtalique, acide adipique, acide sébacique, acide chlorendique (acide 1,4,5,6,7,7-hexachlorobicyclo [2,2,1]-5-heptène-2,3-dicarboxylique), et anhydride tétrabromophtalique.

12. Méthode selon l'une quelconque des revendications 1 à 9, comprenant de plus une étape de synthèse d'une résine de polyuréthanne par réaction de ladite matière première glycolique avec un composé de diisocyanate.

13. Méthode selon la revendication 12, où ledit composé de diisocyanate en comprend un sélectionné parmi diisocyanate de toluène, diisocyanate de diphénylméthane (MDI), diisocyanate de naphtalène, diisocyanate de tolidine, diisocyanate d'hexaméthylène, diisocyanate d'isophorone, diisocyanate de p-phénylène, 1,4-diisocyanate de transcyclohexane, diisocyanate de xylylène (XDI), XDI d'hydrogénération, MDI d'hydrogénération, isocyanate de lysine et diisocyanate de tétraméthylxylène.

14. Méthode selon l'une quelconque des revendications 10 à 13, comprenant de plus une étape de fournir de l'azote gazeux pour la réaction de ladite matière première glycolique avec ledit acide dibasique ou composé de diisocyanate.

15. Méthode selon l'une quelconque des revendications 2 à 14, où les déchets de résine de polyester insaturé sont dégradés avec du glycol à une température de 150° à 250°C.

16. Appareil pour dégrader des déchets de résine de polyester insaturé comprenant:
un récipient réactionnel en acier inoxydable;
un premier moyen d'injection pour injecter du glycol dans ledit récipient réactionnel;
un deuxième moyen d'injection pour injecter un catalyseur dans ledit récipient réactionnel;
un troisième moyen d'injection pour injecter des déchets de résine de polyester insaturé dans ledit récipient réactionnel;
un moyen de chauffage pour chauffer ledit récipient réactionnel;
un moyen de refroidissement pour refroidir ledit récipient réactionnel;
un agitateur pour soumettre une solution ayant réagi à agitation dans ledit récipient réactionnel;
un refroidisseur pour liquéfier les composants volatils, comprenant un composant se sublimant, étant générés dans ledit récipient réactionnel;
un piège étant prévu dans un trajet connectant ledit récipient réactionnel audit refroidisseur pour éliminer ledit composant se sublimant qui est généré dans ledit récipient réactionnel; et
un port de sortie étant prévu dans ledit récipient réactionnel pour prélever un liquide de dégradation résultant de la réaction de dégradation dans ledit récipient réactionnel.

17. Appareil pour le recyclage de déchets de résine de polyester insaturé comprenant :
un récipient réactionnel en acier inoxydable;
un premier moyen d'injection pour injecter du glycol dans ledit récipient réactionnel;
un deuxième moyen d'injection pour injecter un catalyseur dans ledit récipient réactionnel;
un troisième moyen d'injection pour injecter des déchets de résine de polyester insaturé dans ledit récipient réactionnel;
un moyen de chauffage pour chauffer ledit récipient réactionnel;
un moyen de refroidissement pour refroidir ledit récipient réactionnel;
un agitateur pour soumettre une solution ayant réagi à agitation dans ledit récipient réactionnel;
un refroidisseur pour liquéfier les composants volatils, comprenant un composant se sublimant, étant générés dans ledit récipient réactionnel;
un piège étant prévu dans un trajet connectant ledit récipient réactionnel audit refroidisseur pour éliminer ledit composant se sublimant qui est généré dans ledit récipient réactionnel;
un port de sortie étant prévu dans ledit récipient réactionnel pour prélever un liquide de dégradation résultant de la réaction de dégradation dans ledit récipient réactionnel;
un séparateur centrifuge pour centrifuger ledit liquide de dégradation qui est prélevé dudit port de sortie;
un quatrième moyen d'injection pour réinjecter ledit liquide de dégradation ayant été soumis à l'élimination des précipités par centrifugation par ledit séparateur centrifuge, dans ledit récipient réactionnel pour la réaction de resynthèse;
un cinquième moyen d'injection pour injecter de l'anhydride maléique dans ledit récipient réactionnel;
un sixième moyen d'injection pour injecter de l'anhydride phtalique dans ledit récipient réactionnel ;
un septième moyen d'injection pour injecter du styrène dans ledit récipient réactionnel; et
un tube d'entrée d'azote pour introduire de l'azote gazeux dans ledit récipient réactionnel qui est en réaction de resynthèse,
pour resynthétiser la résine de polyester insaturé recyclée dans ledit récipient réactionnel tout en effectuant le chauffage par ledit moyen chauffant et l'agitation par ledit agitateur.

18. Appareil selon la revendication 16 ou la revendication 17, où ledit récipient réactionnel est fermable.

19. Utilisation d'un appareil selon l'une quelconque des revendications 16 à 18 pour le recyclage de déchets de résine de polyester insaturé qui comprend des déchets d'un produit plastique renforcé de fibres contenant de la fibre de verre.
